# FASCICULE DE BREVET EUROPEEN

(11) **EP 0 483 899 B1**
(45) Date de publication et mention de la délivrance du brevet: **05.03.1997**
(21) Numéro de dépôt: 91202666.3
(22) Date de dépôt: 15.10.1991
(51) Int. Cl.: C08L 23/02

(54) **Compositions moulables à base de polyoléfines et objets façonnés à partir de ces compositions**
Formmassen aus Polyolefinen und daraus geformte Gegenstände
Mouldable polyolefin compositions and articles made thereof

(30) Priorité: 26.10.1990 BE 9001022
(43) Date de publication de la demande: 06.05.1992
(73) Titulaire: SOLVAY (Société Anonyme), B-1050 Bruxelles (BE)
(72) Inventeur: Delannoy, Vincent, B-7030 Mons (BE)
(74) Mandataire: Marckx, Frieda

(56) Documents cités:
- EP-A- 0 124 955
- EP-A- 0 196 903
- EP-A- 0 262 783
- US-A- 4 837 074
- US-A- 4 904 735

## Description

La présente invention concerne des compositions moulables à base de polyoléfines. Elle concerne aussi des objets façonnés à partir de ces compositions, tels que des corps creux, des tubes, des films, des feuilles, des plaques ou des profilés dont l'application requiert des propriétés optiques (brillance, transparence, fini de surface) améliorées.

Il est connu d'améliorer l'état de surface d'objets extrudés à base de polymères d'oléfines par addition de petites quantités de polymères fluorés (voir par exemple le brevet US-A-3125547 (DU PONT DE NEMOURS)). Il est également connu d'incorporer aux polymères d'oléfines en vue de les lubrifier une composition granulaire à base de fluoroélastomère contenant, dispersée sur sa surface, de 5 à 70 % en poids d'un polymère d'oléfine sous forme d'une poudre qui soit identique au polymère d'oléfine à lubrifier (demande de brevet EP-A-O 196 903). Il est connu, par ailleurs, que l'addition, à ces compositions, de faibles quantités de cire permet de les mettre en oeuvre par extrusion à une cadence particulièrement élevée sans perturber l'état de surface des produits obtenus (demande de brevet EP-A-0282882 (HOECHST)). La surface des différents objets obtenus à partir de ces compositions, bien que lisse et exempte de défauts, reste insuffisamment brillante.

On a maintenant trouvé des compositions moulables à base de polyoléfines contenant de faibles quantités de polymères fluorés et de polyéthylènes basse densité qui permettent l'obtention d'objets dont les propriétés optiques sont particulièrement performantes. En particulier, ces compositions permettent l'obtention d'objets dont la surface est particulièrement brillante et dont la transparence est améliorée. Ces compositions peuvent être mises en oeuvre par les différents procédés conventionnels de moulage, principalement par extrusion et par injection.

La présente invention concerne dès lors des compositions moulables (C), à base d'au moins une polyoléfine (X) comprenant entre 0,001 et 3 % en poids d'un polymère fluoré (Y) et entre 0,01 et 10 % en poids d'un polyéthylène basse densité (Z) différent de la polyoléfine X.

Les polyoléfines (X) utilisables selon l'invention sont choisies notamment parmi les polymères de l'éthylène et les polymères du propylène, ces derniers étant particulièrement préférés.

Les polymères de l'éthylène sont choisis généralement parmi les polymères haute densité de l'éthylène, plus particulièrement parmi les homopolymères de l'éthylène et les copolymères de ce dernier avec une alpha-monooléfine contenant de 3 à 18 atomes de carbone telle que par exemple le butène-1, le pentène-1, les méthylbutènes-1, l'hexène-1, les 3- et 4-méthyl-pentènes-1 et l'octène-1 dont la densité est supérieure à 0,935 et de préférence comprise entre 0,94 et 0,98. Lorsqu'il est fait usage de copolymères de l'éthylène, le comonomère est choisi de préférence parmi le butène-1, le pentène-1 et l'hexène-1 et sa concentration est ajustée de manière à satisfaire aux valeurs de densité du polymère final définies ci-dessus.

Les polymères du propylène sont des homopolymères ou des copolymères du propylène avec des alpha-oléfines dont la molécule contient de 2 à 18, de préférence de 2 à 8 atomes de carbone telles que l'éthylène, le butène-1, le pentène-1, les méthylbutènes-1, l'hexène-1, les 3- et 4-méthyl-pentènes-1 et l'octène-1. Les homopolymères du propylène conviennent bien.

Des polyoléfines (X) également utilisables pour fabriquer les compositions (C) selon l'invention sont les copolymères du propylène ou de l'éthylène avec des dioléfines comprenant de 4 à 18 atomes de carbone. De préférence, les dioléfines sont des dioléfines aliphatiques non conjuguées telles que le 4-vinylcyclohexène, des dioléfines alicycliques ayant un pont endocyclique telles que le dicyclopentadiène, le méthylène- et l'éthylydène-norbornène et les dioléfines conjuguées telles que le butadiène ou l'isoprène.

D'autres polyoléfines (X) également utilisables selon l'invention sont les élastomères thermoplastiques oléfiniques (dénommés ci-après ETO) qui sont des mélanges mécaniques de polyoléfines cristallines telles que le polyéthylène et le polypropylène et d'élastomères oléfiniques tels que des co- et terpolymères élastomériques de l'éthylène, du propylène et d'un éventuel diène, comme le 1,4-hexadiène, ces élastomères étant éventuellement partiellement réticulés; à titre d'exemples de ces ETO, on peut citer les produits TPR d'UNIROYAL, Telcar de GOODRICH, Nordel TP de DU PONT, Dutral TP de MONTEDISON et Santoprène de MONSANTO.

Ces différentes polyoléfines sont bien connues dans la technique. Leur préparation peut être effectuée de manière conventionnelle par polymérisation à basse pression en présence de catalyseurs du type Phillips à base de chrome hexavalent sur support à base de silice ou en présence de catalyseurs du type Ziegler-Natta.

Les compositions (C) selon l'invention contiennent au moins un polymère fluoré (Y). Par polymère fluoré, on entend désigner des polymères dérivés de monomères dont le rapport atomique fluor/carbone est au moins égal à 1/2. Le comportement thermique de ces polymères est de préférence proche de celui de la polyoléfine (X). En particulier, les polymères (Y) doivent être de préférence solides ou élastomériques lorsque la polyoléfine (X) est solide et fluides lorsque cette dernière est à l'état fondu. Dès lors, il convient qu'ils soient fluides à des températures comprises entre 100 et 400°C, de préférence entre 125 et 280°C et plus particulièrement entre 150 et 250°C. A titre d'exemples de ces polymères (Y), on peut citer les polymères dérivés d'oléfines fluorées telles que le fluorure de vinyle, le fluorure de vinylidène, le trifluoréthylène, le chlorotrifluoréthylène, le tétrafluoréthylène, l'hexafluoropropylène, l'hexafluorisobutylène, les perfluoralkoxy oléfines et les copolymères de ces composés entre eux ainsi qu'avec des oléfines non fluorées tels que les copolymères du fluorure de vinylidène avec le chlorotrifluoréthylène ou l'hexafluoropropylène et les copolymères de l'éthylène avec le chlorotrifluoréthylène. Des polymères (Y) plus particulièrement préférés sont les polymères et copolymères du fluorure de vinylidène.

La teneur en polymères fluorés (Y) dans la composition (C) est comprise entre 0,001 et 3 % en poids, de préférence entre 0,005 et 0,5 % en poids, plus particulièrement entre 0,01 et 0,1 % en poids du poids total de la composition (C).

Selon l'invention, les compositions (C) comprennent aussi des polymères choisis parmi des polymères de l'éthylène, différents des polymères de l'éthylène répondant à la définition de la polyoléfine (X), et dont la densité est généralement inférieure, ou égale, à 0,935 (polyéthylène (Z)). Ces polymères peuvent être obtenus, de manière connue, par polymérisation radicalaire à haute pression de l'éthylène ou par polymérisation à basse pression à l'intervention des catalyseurs Ziegler-Natta ou des catalyseurs Phillips mentionnés plus haut. Les polyéthylènes préférés sont des polymères obtenus à basse pression, connus sous la dénomination de "polyéthylènes linéaires basse densité" (LLDPE). Ces polymères sont généralement obtenus par copolymérisation de l'éthylène avec des alpha-oléfines dont la molécule contient de 4 à 10 atomes de carbone telles que le butène-1, l'hexène-1 ou l'octène-1, le butène-1 étant particulièrement préféré. La densité de ces polymères, qui dépend partiellement de la teneur en comonomère, peut varier de 0,89 à 0,935, plus particulièrement de 0,91 à 0,93.

La teneur en polyéthylènes (Z) dans les compositions (C) est comprise entre 0,01 et 10 % en poids, de préférence entre 0,5 et 6 % en poids, plus particulièrement entre 1 et 4 % en poids par rapport au poids total de la composition (C).

Il va de soi que les compositions moulables selon l'invention peuvent contenir une ou plusieurs polyoléfines (X), un ou plusieurs polymères fluorés (Y) et un ou plusieurs polyéthylènes (Z).

Outre la polyoléfine (X), le polymère fluoré (Y) et le polyéthylène basse densité (Z), la composition (C) peut contenir des additifs usuels tels que des stabilisants, des pigments ou des agents nucléants. Ces additifs sont par exemple choisis parmi le talc, la silice, le noir de carbone ou les oxydes métalliques. Les composés réactifs tels que des agents de réticulation sont de préférence exclus de cette composition.

La préparation des compositions selon l'invention peut se faire par toutes les méthodes connues de la technique. Un mode opératoire particulièrement simple comprend le mélange à sec et dans les proportions souhaitées des différents constituants obtenus sous forme de poudre. On peut aussi préparer, dans un premier temps, un mélange primaire appelé mélange maître ou "master batch" de polyéthylène basse densité (Z) riche en polymère fluoré (Y) et contenant les éventuels additifs. La teneur en polymère fluoré dans ce mélange primaire est en général comprise entre 0,05 et 25 % en poids, de préférence entre 0,5 et 10 % en poids, plus particulièrement entre 1 et 6 % en poids du mélange. Ce mélange primaire est introduit conjointement avec la polyoléfine lors du procédé de transformation, dans des proportions permettant l'obtention d'une composition (C) selon l'invention.

Un avantage inattendu des compositions (C) selon l'invention réside dans l'amélioration des propriétés optiques des objets obtenus par leur mise en oeuvre. On constate en effet que ces propriétés sont non seulement meilleures que celles obtenues lorsque le polymère (Y) ou le polyéthylène (Z) est utilisé seul à titre d'additif de la polyoléfine (X) mais aussi supérieures à celles auxquelles on pouvait s'attendre par leur addition simultanée. Il y a donc une réelle synergie dans l'effet de l'incorporation conjointe du polymère (Y) et du polymère (Z) à titre d'additifs à la polyoléfine (X).

Les compositions (C) selon l'invention sont aptes à être mises en oeuvre par tous les procédés classiques de transformation des matières plastiques, et plus particulièrement par les procédés d'extrusion, d'extrusion-soufflage, d'extrusion-thermoformage et d'injection. Ces compositions conviennent particulièrement bien pour la fabrication d'objets façonnés dont l'application requiert des propriétés optiques (brillance, transparence...) améliorées. Parmi ces objets on peut citer, par exemple, les corps creux tels que les flacons, les bouteilles, les réservoirs ou les conteneurs. Ces compositions conviennent également pour l'obtention de feuilles, de films, de tubes, de tuyaux, de plaques et de profilés.

L'exemple 1 suivant sert à illustrer l'invention. Les exemples 2R, 3R et 4R sont donnés à titre de comparaison.

La caractérisation des objets obtenus au départ de ces compositions (C) ainsi que les unités exprimant les grandeurs mentionnées sont explicitées ci-dessous.

La brillance d'une surface est mesurée par le pourcentage de lumière incidente qui se réfléchit suivant un angle égal à l'angle d'incidence (norme ASTM D 523).

La transparence d'un solide est mesurée, selon la norme ASTM D 1746, par la fraction de lumière incidente qui ne subit pas de déviation lors de son passage au travers dudit solide. Cette fraction est exprimée en %.

### Exemple 1

Une composition (C) est obtenue par mélange à sec, sur un mélangeur HENSCHEL FM 150 C/K (Froid), de :
- 979,2 g de poudre de copolymère statistique à base de polypropylène et contenant 2,5 % d'éthylène commercialisé sous la marque ELTEX P KL001 par SOLVAY & Cie.
- 20 g poudre de polyéthylène linéaire basse densité commercialisé sous la marque ESCORENE par EXXON.
- 0,8 g de poudre de polymère à base de fluorure de vinylidène commercialisé sous la marque SOLEF 11010 par SOLVAY & Cie.

Le mélange résultant, stabilisé de manière conventionnelle, est ensuite granulé sur une granulatrice TROESTER UP 45/2 puis extrudé à 220°C et soufflé de manière à obtenir un flacon dont les parois, de 0,5 mm d'épaisseur, présentent les propriétés optiques suivantes :
- Brillance =: 71 %
- Transparence =: 0,4 %

### Exemples 2R, 3R et 4R

Ces exemples sont donnés à titre de comparaison.

Des compositions dont les caractéristiques sont reprises dans le Tableau I ci-dessous sont granulées et mises en oeuvre dans des conditions strictement identiques à celles décrites dans l'exemple 1 pour former des flacons dont les propriétés optiques sont également reprises dans le Tableau I ci-après.

**Tableau I**

| Exemples | 2R | 3R | 4R |
|---|---|---|---|
| Composition | | | |
| ELTEX P KL001, g | 1000 | 980 | 999,2 |
| ESCORENE, g | 0 | 20 | 0 |
| SOLEF 11010, g | 0 | 0 | 0,8 |
| | | | |

| Propriétés optiques | | | |
|---|---|---|---|
| Brillance, % | 46 | 45 | 58 |
| Transparence, % | 0,1 | 0,1 | 0,3 |

## Revendications

1. Compositions moulables (C) à base d'au moins une polyoléfine (X) comprenant entre 0,001 et 3 % en poids d'un polymère fluoré (Y) caractérisées en ce qu'elles comprennent également entre 0,01 et 10 % en poids d'un polyéthylène basse densité (Z) différent de la polyoléfine (X).

2. Compositions selon la revendication 1, caractérisées en ce que la polyoléfine (X) est choisie parmi les polymères haute densité de l'éthylène et les polymères du propylène.

3. Compositions selon la revendication 1, caractérisées en ce que la polyoléfine (X) est choisie parmi les homopolymères de l'éthylène et les copolymères de l'éthylène avec une alpha-monooléfine contenant de 3 à 18 atomes de carbone dont la densité est supérieure à 0,935.

4. Compositions selon la revendication 1, caractérisées en ce que la polyoléfine (X) est choisie parmi les homopolymères du propylène et les copolymères du propylène avec des alpha-oléfines dont la molécule contient de 2 à 18 atomes de carbone.

5. Compositions selon les revendications 1 à 4, caractérisées en ce que le polymère fluoré (Y) est choisi parmi les polymères dérivés de monomères dont le rapport atomique fluor/carbone est au moins égal à 1/2 et qui sont fluides à des températures comprises entre 100 et 400°C.

6. Compositions selon les revendications 1 à 5, caractérisées en ce que le polymère fluoré (Y) est choisi parmi les polymères et copolymères du fluorure de vinylidène.

7. Compositions selon les revendications 1 à 6, caractérisées en ce que le polymère (Z) a une densité inférieure ou égale à 0,935.

8. Objets façonnés obtenus par moulage de compositions selon l'une quelconque des revendications 1 à 7.

9. Objets selon la revendication 8, façonnés par extrusion, extrusion-soufflage, extrusion-thermoformage ou injection.

10. Objets selon la revendication 8, façonnés en corps creux tels que flacons, bouteilles, réservoirs ou conteneurs.

## Patentansprüche

1. Formbare Zusammensetzungen (C) aus wenigstens einem Polyolefin (X), die zwischen 0,001 und 3 Gew.-% eines Fluorpolymers (Y) enthalten, dadurch gekennzeichnet, daß sie auch zwischen 0,01 und 10 Gew.-% eines Polyethylens niedriger Dichte (Z), das von dem Polyolefin (X) verschieden ist, enthalten.

2. Zusammensetzungen gemäß Anspruch 1, dadurch gekennzeichnet, daß das Polyolefin (X) unter den Ethylenpolymeren hoher Dichte und den Propylenpolymeren ausgewählt ist.

3. Zusammensetzungen gemäß Anspruch 1, dadurch gekennzeichnet, daß das Polyolefin (X) unter den Homopolymeren des Ethylens und den Copolymeren des Ethylens mit einem alpha-Monoolefin, das 3 bis 18 Kohlenstoffatome enthält, deren Dichte höher als 0,935 ist, ausgewählt ist.

4. Zusammensetzungen gemäß Anspruch 1, dadurch gekennzeichnet, daß das Polyolefin (X) unter den Homopolymeren des Propylens und den Copolymeren des Propylens mit alpha-Olefinen, deren Molekül 2 bis 18 Kohlenstoffatome enthält, ausgewählt ist.

5. Zusammensetzungen gemäß den Ansprüchen 1 bis 4, dadurch gekennzeichnet, daß das Fluorpolymer (Y) unter den Polymeren ausgewählt ist, die von Monomeren abgeleitet sind, deren Atomverhältnis Fluor/Kohlenstoff wenigstens gleich 1/2 ist, und die bei Temperaturen zwischen 100 und 400 °C flüssig sind.

6. Zusammensetzungen gemäß den Ansprüchen 1 bis 5, dadurch gekennzeichnet, daß das Fluorpolymer (Y) unter den Polymeren und Copolymeren des Vinylidenfluorids ausgewählt ist.

7. Zusammensetzungen gemäß den Ansprüchen 1 bis 6, dadurch gekennzeichnet, daß das Polymer (Z) eine Dichte niedriger oder gleich 0,935 aufweist.

8. Geformte Gegenstände, die durch Gießen von Zusammensetzungen gemäß einem der Ansprüche 1 bis 7 erhalten wurden.

9. Gegenstände gemäß Anspruch 8, die durch Extrusion, Extrusionsblasen, Extrusionswarmformen oder Spritzgießen geformt wurden.

10. Gegenstände gemäß Anspruch 8, die zu Hohlkörpern wie Fläschchen, Fiaschen, Behältern oder Containern geformt wurden.

## Claims

1. Mouldable compositions (C) based on at least one polyolefin (X), comprising between 0.001 and 3 % by weight of a fluoropolymer (Y), characterised in that they also comprise between 0.01 and 10 % by weight of a low-density polyethylene (Z) different from polyolefin (X).

2. Compositions according to Claim 1, characterised in that the polyolefin (X) is chosen from high-density ethylene polymers and propylene polymers.

3. Compositions according to Claim 1, characterised in that the polyolefin (X) is chosen from ethylene homopolymers and copolymers of ethylene with an alphamonoolefin containing from 3 to 18 carbon atoms, whose density is higher than 0.935.

4. Compositions according to Claim 1, characterised in that the polyolefin (X) is chosen from propylene homopolymers and the copolymers of propylene with alpha-olefins whose molecule contains from 2 to 18 carbon atoms.

5. Compositions according to Claims 1 to 4, characterised in that the fluoropolymer (Y) is chosen from polymers derived from monomers in which the atomic ratio fluorine/carbon is at least 1/2 and which are fluid at temperatures of between 100 and 400 °C.

6. Compositions according to Claims 1 to 5, characterised in that the fluoropolymer (Y) is chosen from vinylidene fluoride polymers and copolymers.

7. Compositions according to Claims 1 to 6, characterised in that the polymer (Z) has a density lower than or equal to 0.935.

8. Shaped articles obtained by moulding compositions according to any one of Claims 1 to 7.

9. Articles according to Claim 8, made by extrusion, film blowing, extrusion-thermoforming or injection moulding.

10. Articles according to Claim 10, made into hollow bodies such as flasks, bottles, storage vessels or containers.
